# EUROPÄISCHE PATENTSCHRIFT

(11) **EP 4 087 802 B1**
(45) Veröffentlichungstag und Bekanntmachung des Hinweises auf die Patenterteilung: **17.01.2024**
(21) Anmeldenummer: 20839057.5
(22) Anmeldetag: 22.12.2020
(51) Int. Cl.: B65G 47/46, B07C 3/00, B07C 3/08, B65G 47/53, B65G 37/02

(54) **SYSTEM ZUM SORTIEREN VON SORTIERSTÜCKEN IN MIT IHRER ZIELDESTINATION LOGISCH VERKNÜPFTE ZIELSTELLEN IN MATRIXANORDNUNG**
SYSTEM FOR SORTING ITEMS IN MATRIX ARRANGEMENT LOGICALLY LINKED TO THEIR TARGET DESTINATION
SYSTÈME DE TRI DES PIÈCES À TRIER DANS LES STATIONS DE DESTINATION LIÉES LOGIQUEMENT À LEUR DESTINATION CIBLE DANS UN AGENCEMENT MATRICE

(30) Priorität: 09.01.2020 EP 20150952
(43) Veröffentlichungstag der Anmeldung: 16.11.2022
(73) Patentinhaber: Körber Supply Chain Logistics GmbH, 78467 Konstanz (DE)
(72) Erfinder: FRITZSCHE, Roland, 90475 Nürnberg (DE)
(74) Vertreter: Müller Schupfner & Partner Patent- und Rechtsanwaltspartnerschaft mbB
(86) Internationale Anmeldenummer: PCT/EP2020/087637
(87) Internationale Veröffentlichungsnummer: WO 2021/140031

(56) Entgegenhaltungen:
- US-A1- 2004 073 333
- US-A1- 2007 075 000
- US-A1- 2018 154 398

## Beschreibung

Die Erfindung betrifft ein System zum Sortieren von Sortierstücken in mit ihrer Zieldestination logisch verknüpfte Zielstellen.

Grosse Logistikzentren mit Gepäck-, Post- und/oder Paketsortieranlagen, in welchen Gepäckstücke, Briefe und/oder große Briefe und/oder Pakete verarbeitet werden, werden beispielsweise von der Firma Siemens Logistics GmbH, Konstanz, Deutschland, vertrieben.

In derartigen Logistikzentren werden Gepäckstücke, Briefe, Pakete Päckchen, Smalls bzw. Sendungen aller Art (im Folgenden als Sortierstücke bezeichnet)aus einem Vorrat von einem Fördersystem entlang eines Förderweges transportiert und an mehreren Sortierausgängen, realisiert zum Beispiel durch Sortierweichen oder Querbandsorter oder Kippvorrichtungen, den jeweiligen Zielstellen, wie z.B. Zielstellen einer Gepäcksortieranlage in einem Flughafen, zugeführt. Während des Transport- oder Sortierprozesses werden die Sortierstücke in die Zielstellen sortiert. Jeder Zielstelle wird für den Sortierprozess mittels einer Sortiersteuerung jeweils ein variabler Ziel-Code entsprechend der Sortierlogik bzw. entsprechend dem Sortierprozess zugeordnet. Auch den Sortierstücken wird ein variabler Ziel-Code zugeordnet, welchem entsprechend sie dann in eine Zielstelle sortiert werden. Mehrere Zielstellen können auch den gleichen Ziel-Code haben, beispielsweise bei Zieladressen mit bekannt hohem Sendungsaufkommen. Das bietet sich z. B. an, wenn die Kapazität einer Zielstelle nicht ausreicht, um alle Sortierstücke für diesen Ziel-Code aufzunehmen.

Mit dem starken Aufkommen von Kleingutsendungen, für die in den nächsten Jahren jährliche Zuwachsraten von mehr als 20% prognostiziert werden, steigt zum einen die Anzahl der zu verarbeitenden Sortierstücke massiv an, während zum anderen die sehr häufig nicht homogene Verpackung dieser Kleingutsendungen die Sortierung dieser allgemein als lageinstabil bezeichneten Sortierstücke im Vergleich zu einem herkömmlichen quaderförmigen Paket oder Päckchen wesentlich anspruchsvoller macht. Für diese Kleingutsendungen, die im Wesentlichen aus dem B2C-E-Commerce stammen und extrem heterogene und lageinstabile Verpackungen aufweisen, wird der zukünftige Anteil am gesamten Stückgutaufkommen auf mehr als 50% geschätzt.

Weiter wird im Zuge der Automatisierung der Sortierprozesse eine Vollautomatisierung des Prozesses gemäss dem Schlagwort «One Touch» auf möglichst viele Endstellen angestrebt. Um an dieser Stelle einen durchsatzmindernden mehrstufigen oder sequenziellen Sortierprozess vermeiden zu können, ist es daher erforderlich möglichst viele Endstellen auf kleinstem Raum realisieren zu können. Diese Anforderung lässt sich wiederum nur durch Sortiersysteme erreichen, die eine Anordnung der Endstellen und der Fördertechnik über mehrere Ebenen ermöglichen und somit raumgängig sind.

Mit dem stetig steigenden Aufkommen von Paketen und Päckchen stehen viele Kurier-, Express- und Paketdienste, aber auch Händler, wie Amazon, vor dem Problem, schnell und wirtschaftlich verschiedenste Güter sortieren zu können. Aus diesem Grund besteht ein grundsätzlicher Bedarf nach Hochleistungssortieranlagen, die jedoch in der Steuerung komplex sind und sehr hohe Investitionsvolumina erfordern. Zudem haben derartige Sortieranlagen auch vergleichsweise lange Planungs-, Installations- und Inbetriebnahmezeiträume.

Am Markt gibt es bereits eine Vielzahl von Sortierkonzepten für die Lösung der vorstehend genannten Sortieraufgaben; auch Matrixsortierkonzepte sind bekannt. Dazu werden Zielstellen als Matrix, d.h. meist in einer Ebene und mit einem bestimmten Abstand zueinander angeordnet. Das Ausschleusen oder Sortieren der Sortierstücke auf die Zielstellen kann dabei durch Diverter, Pusher, Sorter oder AGVs durchgeführt werden. Diverter und Pusher können meist aber nur einseitig sortieren. Kreissorter mit Quergurt- oder Kippschalentechnologie benötigen viel Platz durch grossen Umlenkradien und erfordern hohe Investitionen. AGVs sind ebenfalls nur bedingt geeignet, da sie entweder auf festen Bahnen fahren, wobei sie dann ihren Vorteil der hohen Flexibilität nicht ausspielen können, oder sie fahren unterschiedlichste Zielstellen an, wobei dann aber durch den Querverkehr die Sortierleistung wieder stark eingeschränkt werden kann.

US 2007/075 000 A1 zeigt eine Vorrichtung zum Sortieren von Produkten. Die Vorrichtung umfasst mindestens ein Entlademodul und mindestens zwei Sortierer. Ein Matrixsystem ist so konfiguriert, dass es Produkte von dem mindestens einen Entlademodul empfängt und das Produkt über mehrere Umleiteinheiten in einem Transportweg mit den mindestens zwei Sortierern zu einem der mindestens zwei Sortierer umleitet.

US 2018/154398 A1 offenbart ein System zum Sortieren von Sortierstücken nach dem Oberbegriff des Anspruchs 1.

Der vorliegenden Erfindung liegt die Aufgabe zugrunde, ein System zum Sortieren von Sortierstücken in mit ihrer Zieldestination logisch verknüpfte Zielstellen anzugeben, welches sich durch eine hohe Sortierkapazität bei hoher Sortierqualität auch für lageinstabile Sortierstücke auszeichnet. Zudem soll ein derartiges System preiswert erstellt werden können und einfach im Betrieb sein.

Diese Aufgabe wird erfindungsgemäss durch die Merkmale des Anspruchs 1 gelöst.

Das erfindungsgemäße System zum Sortieren von Sortierstücken umfasst:
a) eine Vielzahl von in einem Array angeordnete Zielstellen, wobei die Zielstellen zudem im Wesentlichen in einer ersten Ebene befindlich angeordnet sind, und wobei jeder der Zielstellen mittels einer Sortiersteuerung zumindest temporär eine oder mehrere Zieldestinationen logisch zuordenbar sind;
b) eine Vielzahl von in einer ersten Richtung verlaufenden ersten Sortierförderern mit von der Sortiersteuerung ansteuerbaren Ausschleusemodulen, die in einer oberhalb der ersten Ebene befindlichen zweiten Ebene und dabei so zwischen Reihen von Zielstellen verlaufend angeordnet sind, dass die in den ersten Sortierförderern angeordneten Ausschleusemodule in der Lage sind, zu beiden Seiten der ersten Sortierförderer angeordnete Zielstellen mit für diese Zielstellen vorgesehenen Sortierstücken zu bedienen, und
c) ein auf einer Seite des Arrays von Zielstellen und in der zweiten Ebene angeordneter erster Vorsortierförderer mit von der Sortiersteuerung ansteuerbaren Ausschleusemodulen, wobei der erste Vorsortierförderer mit seinen Ausschleusemodulen so steuerbar ist, dass ein Sortierstück an den Sortierförderer der Vielzahl der ersten Sortierförderern übergebbar ist, der die für dieses Sortierstück vorgesehene Zielstelle bedient.

Auf diese Weise kann eine zweistufige Sortierung auf als Matrix angeordnete Zielstellen vorgenommen werden. Die Vielzahl von ersten Sortierförderern kann dabei in einfacher Weise als Linearsorter ausgelegt werden, die auf der Förderstrecke beispielsweise die Verwendung von einfachen Gurtfördermodulen und im Bereich der Zielstellen einfache Gurtkippermodule (kippbare Gurtfördermodule) zum beidseitigen Ausschleusen der Sortierstücke möglich machen. Somit kann hier der besondere Vorteil erzielt werden, dass mit diesem Vorsortierförderer jede der mit den Sortierförderern erreichbaren Zielstellen bedient werden können.

Erfindungsgemäß sind eine Vielzahl von in einer zweiten zur ersten Richtung in einem Winkel verlaufenden Richtung verlaufende zweite Sortierförderer mit von der Sortiersteuerung ansteuerbaren Ausschleusemodulen vorgesehen, die in der oberhalb der ersten Ebene befindlichen zweiten Ebene und dabei so zwischen Reihen von Zielstellen verlaufend angeordnet sind, dass die in den zweiten Sortierförderern angeordneten Ausschleusemodule in der Lage sind, zu beiden Seiten der zweiten Sortierförderer angeordnete Zielstellen mit für diese Zielstellen vorgesehenen Sortierstücken zu bedienen, und ein auf einer Seite des Arrays von Zielstellen und in der zweiten Ebene angeordneter zweiter Vorsortierförderer mit von der Sortiersteuerung ansteuerbaren Ausschleusemodulen vorgesehen ist, wobei der zweite Vorsortierförderer auf der gegenüberliegenden Seite des Arrays von Zielstellen angeordnet mit seinen Ausschleusemodulen so steuerbar ist, dass ein Sortierstück an den Sortierförderer der Vielzahl der zweiten Sortierfördern übergebbar ist, der die für dieses Sortierstück vorgesehene Zielstelle bedient. Damit ist ein System geschaffen, dass es möglich macht, jede Zielstellen mit einem der ersten Sortierförderer und mit einem der zweiten Sortierförderer erreichen zu können. Damit kann die Sortierleistung des Systems bis zu verdoppelt werden, ohne dass für die einzelnen Komponenten des Systems eine weitere zusätzliche Ertüchtigung hinsichtlich der Laufgeschwindigkeit oder ähnlicher Parameter vorzunehmen wäre.

Diese Variante kann besonders platzsparend und wenig intensiv an Komponenten realisiert werden, wenn die zweite Richtung entgegengesetzt zur ersten Richtung verläuft und die ersten und zweiten Sortierförderer so angeordnet sind, dass sie in alternierenden Richtungen verlaufend das Array von Zielstellen überspannen. Diese Ausführungsvariante deckt somit besonders den Fall einer rechtwinkligen oder hexagonalen Matrix von Zielstellen ab. Im erstgenannten Fall kann das Array von Zielstellen ein rechteckiges Muster mit M Spalten und N Zeilen aufweisen, in dem die Zielstellen bis zu vier nächste Nachbarzielstellen aufweisen. Im zweitgenannten Fall kann das Array von Zielstellen ein hexagonales Muster aufweisen, in dem die Zielstellen bis zu sechs nächste Nachbarzielstellen aufweisen. Grundsätzlich kann das Array von Zielstellen aber auch ein unregelmässiges Muster aufweisen, indem beispielsweise auch unterschiedlich grosse Zielstellen angeordnet sein können. Weiter kann das Array von Zielstellen auch noch von Fluchtwegen oder allgemein grösseren Fahrwegen durchzogen sein oder auch eine Ausgestaltung von zumindest einem Teil der Zielstellen als Pufferzielstellen (ähnlich zu heutigen Verteilzentren mit Quergurtsortern) aufweisen. Die einzige bedeutsame Eigenschaft, die man diesbezüglich an das Array im Sinne der vorliegenden Erfindung stellen kann, könnte das Vorhandensein einer gewissen räumlichen Anordnung von Zielstellen oder von in die Zielstellen mündenden Zuführrutschen sein, dass die Sortierförderer im Idealfall entlang ihres Förderweges eine möglichst grosse Anzahl von auf beiden Seiten des Sortierförderers angeordneten Zielstellen bedienen können.

Grundsätzlich ist es aber auch möglich, dass alle Sortierförderer in dieselbe Richtung laufen und somit die Sortierstücke nur auf einer Seite des Arrays über den oder die Vorsortierförderer herangeführt werden. So kann mit den Sortierförderer bei entsprechend ausgestalteten Vorsortierförderern jedes Zielstelle auf zwei Möglichkeiten erreicht werden.

In einer weiteren vorteilhaften Ausgestaltung der Erfindung kann eine Vielzahl von in einer dritten Richtung verlaufenden dritten Sortierförderern mit von der Sortiersteuerung ansteuerbaren Ausschleusemodulen vorgesehen sein, die in einer oberhalb der zweiten Ebene befindlichen dritten Ebene und dabei so zwischen Reihen von Zielstellen verlaufend angeordnet sind, dass die in den dritten Sortierförderern angeordneten Ausschleusemodule in der Lage sind, zu beiden Seiten der dritten Sortierförderer angeordnete Zielstellen mit für diese Zielstellen vorgesehenen Sortierstücken zu bedienen, und
c) ein auf einer Seite des Arrays von Zielstellen und in der dritten Ebene angeordneter dritter Vorsortierförderer mit von der Sortiersteuerung ansteuerbaren Ausschleusemodulen vorgesehen sein, wobei der dritte Vorsortierförderer mit seinen Ausschleusemodulen so steuerbar ist, dass ein Sortierstück an den Sortierförderer der Vielzahl der dritten Sortierfördern übergebbar ist, der die für dieses Sortierstück vorgesehene Zielstelle bedient.

Ergänzend hierzu kann eine Vielzahl von in einer vierten zur dritten Richtung in einem Winkel verlaufenden Richtung verlaufende vierte Sortierförderer mit von der Sortiersteuerung ansteuerbaren Ausschleusemodulen vorgesehen sein, die in der oberhalb der zweiten Ebene befindlichen dritten Ebene und dabei so zwischen Reihen von Zielstellen verlaufend angeordnet sind, dass die in den vierten Sortierförderern angeordneten Ausschleusemodulen in der Lage sind, zu beiden Seiten der vierten Sortierförderer angeordnete Zielstellen mit für diese Zielstellen vorgesehenen Sortierstücken zu bedienen, und
ein auf einer Seite des Arrays von Zielstellen und in der dritten Ebene angeordneter vierter Vorsortierförderer mit von der Sortiersteuerung ansteuerbaren Ausschleusemodulen vorgesehen sein, wobei der vierte Vorsortierförderer auf der gegenüberliegenden Seite des Arrays von Zielstellen angeordnet mit seinen Ausschleusemodulen so steuerbar ist, dass ein Sortierstück an den Sortierförderer der Vielzahl der vierten Sortierfördern übergebbar ist, der die für dieses Sortierstück vorgesehene Zielstelle bedient.

Selbstverständlich kann nun auch eine weitere oder auch noch mehrere weitere Ebenen mit einer derartigen Anordnung von Sortierförderern und Vorsortierförderern realisiert werden. Grundsätzlich kann es dabei auch vorgesehen sein, dass - am Beispiel der zweiten und dritten Ebene erklärt - die erste und die dritte Richtung übereinstimmt sind (und ebenso die zweite und vierte Richtung übereinstimmend sind). Einzig die Anordnung der entsprechenden Vorsortierförderer müsste hierfür entsprechend angepasst werden. Es wäre aber auch möglich, dass die erste und die zweite Richtung und die dritte und die vierte Richtung jeweils paarweise gleich sind.

In vorteilhafter Weiterbildung kann es hier weiter vorgesehen sein, dass die vierte Richtung entgegengesetzt zur dritten Richtung verläuft und die dritten und vierten Sortierförderer so angeordnet sind, dass sie in alternierenden Richtungen verlaufend das Array von Zielstellen überspannen. Somit kann auch hier jede Zielstellen von einem der dritten Sortierförderer und von einem der vierten Sortierförderer erreicht werden. Dabei kann die dritte und die vierte Richtung in einem Winkel, vorzugsweise im Wesentlichen senkrecht oder in einem Winkel von 60°, zur ersten und zweiten Richtung verlaufen.

Auf diese Weise ist es in der dritten Ebene nun möglich eine Sortierkonzept in Analogie zur zweiten Ebene bereitstellen zu können, mit dem jede Zielstelle nun von drei bzw. vier verschiedenen Sortierförderern, die jeweils gruppenweise über einen eigenen Vorsortierförderer verfügen, erreichbar ist, womit eine weitere Steigerung der Sortierleistung einhergeht und somit sehr hohe Gesamtsortierleistungen erreichbar sind.

Eine weitere vorteilhafte Ausgestaltung der Erfindung kann realisiert werden, wenn mindestens einer der vorstehende genannten vier Vorsortierförderer als das Array von Zielstellen umschliessender Ringsorter ausgestaltet ist. Somit kann ein Sortierstück an mindestens eine der Gruppen von Sortierförderer übergeben werden. In einer zweckmässigen Ausgestaltung kann es aber auch vorgesehen sein, dass alle Vorsortierförderer zusammen in einem das Array von Zielstellen umschliessenden Ringsorter eingebunden sind, wobei der Ringsorter in eine logische Anzahl von Sortierabschnitten unterteilt ist, die der Anzahl von Gruppen von Sortierförderern entspricht, wobei jeder Sortierabschnitt einer Gruppe von Sortierförderern zugeordnet ist und vor jedem Sortierabschnitt - gesehen in Förderrichtung der Sortierstücke - eine Aufgabestelle zur Aufgabe von Sortierstücken auf den Ringsorter vorgesehen ist.

Diese Ausgestaltung erlaubt es, dass ein auf dem Ringsorter befindliches Sortierstück somit an einer der Anzahl von vorhandenen Gruppen von Sortierförderer entsprechenden Stellen auf den für die Zielstelle vorgesehenen Sortierförderer aufgegeben werden kann. Bei einem Ringsorter mit vier Gruppen von Sortierförderern bei rechteckiger Matrix der Zielstellen ergeben sich somit pro Umlauf des Ringsorters vier Möglichkeiten, das Sortierstück an einen die für dieses Sortierstück vorgesehene Zielstelle bedienenden Sortierförderer zu übergeben. Hiermit wird der Vorteil erzielt, dass es grundsätzlich keiner Vorsortierung bedarf und die Sortierstücke an einer Vielzahl von möglichen Stellen auf einen verfügbaren Sortierförderer ausgegeben werden können. Somit kann bei der beispielhaft beschriebenen rechtwinkligen Anordnung von vier Vorsortierstrecken in einem Ringsorter ein Sortierstück um 90 Grad weiter bis zur nächsten Vorsortierstrecke weitergefördert werden, falls der betreffende Sortierförderer des vorhergehenden Abschnitts nicht verfügbar war. Wie oben schon beschrieben, ergeben sich während eines gesamten Umlaufs des Ringförderers so vier Gelegenheiten eine bestimmte Zielstelle mit einem der möglichen Sortierförderer für diese Zielstelle erreichen zu können.

Vorteilhafte Ausgestaltungen der vorliegenden Erfindung werden nachfolgend detailliert mit Bezug auf die Zeichnung näher erläutert. Dabei zeigt:
- Figur 1: in schematischer Ansicht ein im Aufbau befindliches Sortiersystem mit als rechteckige Matrix angeordneten Zielstellen;
- Figur 2: in schematischer Ansicht das Sortiersystem gemäss Figur 1 mit einer Anzahl von drei ersten Sortierförderern und einem ersten vorgelagerten Vorsortierförderer;
- Figur 3: in schematischer Ansicht das Sortiersystem gemäss Figur 2 mit einer Anzahl von drei zweiten Sortierförderern und einem zweiten vorgelagerten Vorsortierförderer;
- Figur 4: in schematischer Ansicht das Sortiersystem gemäss Figur 3 mit einer Anzahl von fünf dritten Sortierförderern und vier vierten Sortierförderern und einem dritten und einem vierten vorgelagerten Vorsortierförderer; und
- Figur 5: in schematischer Ansicht das Sortiersystem gemäss Figur 4 mit einem als in vier logisch unterteilte Vorsortierförderer ausgebildeten Ringsorter.

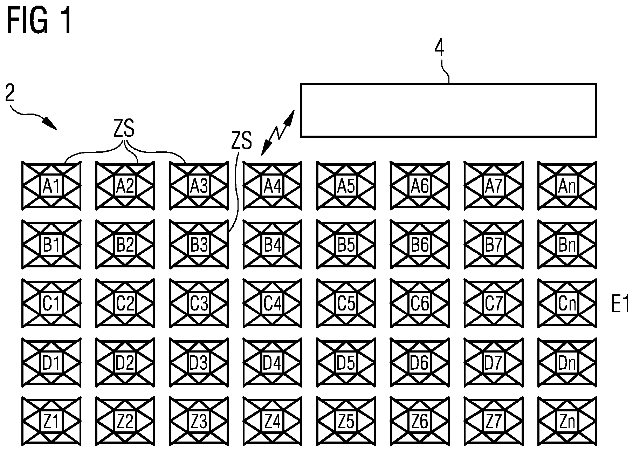

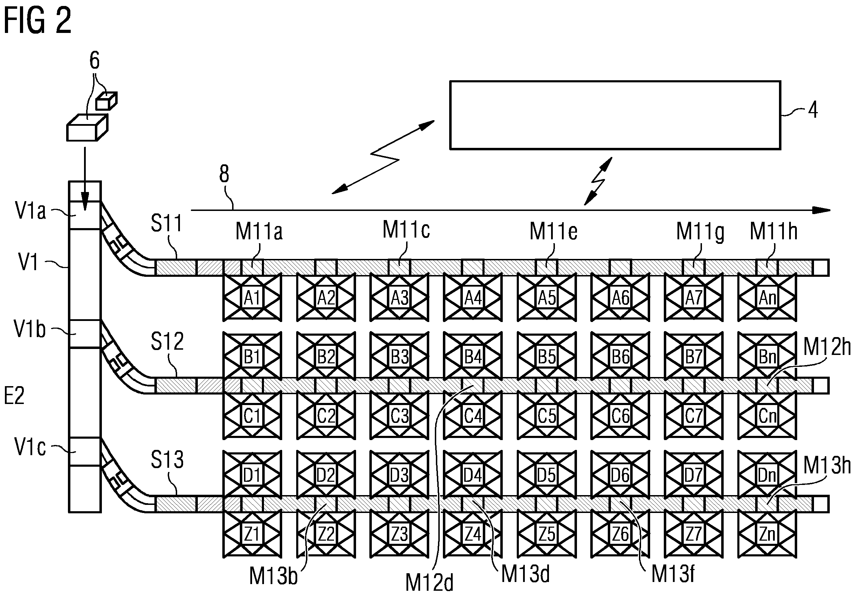

Figur 1 zeigt in schematischer Aufsicht ein mit den Figuren 2 bis 6 weiter aufzubauendes Sortiersystem 2 für postalische Sortierstücke 6, wie Päckchen, Pakete, Briefe und dergleichen. In einer ersten Ebene E1 sind in einer rechteckigen Matrix eine Anzahl von Zielstellen A1 bis An, B1 bis Bn, C1 bis Cn, D1 bis Dn und Z1 bis Zn, nachfolgend kurz mit ZS bezeichnet, wenn nicht eine ganz spezielle Zielstelle gemeint ist. Die Zielstellen ZS sind hier als vierseitige Rutschen, die in einen unterhalb der Rutschen stehenden Rollwagen münden, ausgebildet. Jede dieser Zielstellen ZS wird von einer Sortiersteuerung 4 für jeden Sortiervorgang ein logisches Ziel -z.B. eine konkrete Adresse oder auch nur ein logisches Zwischenziel, z.B. ein bestimmter LKW oder ein bestimmter Flug für den Weitertransport, für die spätere Sortierung in einem nachfolgenden Sortierschritt - zugeordnet.

Im gezeigten Ausführungsbeispiel für das Array ist eine regelmässige Anordnung der Zielstellen ZS vorgesehen. Selbstverständlich können auch unterschiedlich grosse Zielstellen oder auch grössere Abstände zwischen einzelnen Zielstellen, z.B. für Fluchtwege oder dergleichen, realisiert werden.

Figur 2 zeigt nun bereits in einer schematischen Aussicht das Sortiersystem 2 gemäss dem Ausbaustand gemäss Figur 1 zusätzlich mit einer Anzahl von drei ersten Sortierförderern S11, S12 und S13 und einem diesen drei ersten Sortierförderern S11, S12, S13 vorgelagerten ersten Vorsortierförderer V1. Die drei ersten Sortierförderer S11, S12, S13 weisen eine Anzahl von je 8 von der Sortiersteuerung 4 drahtlos ansteuerbare Ausschleusemodule M11a bis M11h, M12a bis M12h, M13a bis M13h - kurz auch einfach mit dem Buchstaben M bezeichnet - auf. Die Ausschleusemodule M sind dabei als Gurtkippe-Module ausgestaltet. Zwischen den Ausschleusemodulen M befinden sich hier nicht weiter bezeichnete Gurtfördermodule.

Die ersten Sortierförderer S12, S13 sind hier vorliegend in einer zweiten Ebene E2 oberhalb der ersten Ebene E1 und dabei so zwischen Reihen von Zielstellen ZS verlaufend angeordnet, dass die in den ersten Sortierförderern S12, S13 angeordneten Ausschleusemodule M12a bis M12h, M13a bis M13h in der Lage sind, zu beiden Seiten der ersten Sortierförderer S12, S13 angeordnete Zielstellen ZS mit für diese Zielstellen ZS vorgesehenen und in einer ersten Förderrichtung 8 geförderten Sortierstücken 6 zu bedienen. So kann beispielsweise ein Sortierstück 6 von dem Ausschleusemodul M12d in die Zielstelle B4 oder in die Zielstelle C4 entleert werden.

In der zeichnerischen Darstellung auf der linken Seite des Arrays von Zielstellen ZS befindet sich ein ebenfalls in der zweiten Ebene E2 angeordneter erster Vorsortierförderer V1 mit von der Sortiersteuerung 4 ansteuerbaren Ausschleusemodulen V1a, V1b, V1c, wobei dieser erste Vorsortierförderer V1 mit seinen Ausschleusemodulen V1a bis V1c so drahtlos ansteuerbar ist, dass ein Sortierstück an den Sortierförderer der Vielzahl der ersten Sortierfördern übergebbar ist, der die für dieses Sortierstück vorgesehene Zielstelle bedient. Zurückkommend auf das vorstehend genannte Beispiel mit dem Ausschleusemodul M12d bedarf es hier einer Ansteuerung des Ausschleusemoduls V1b, damit das Sortierstück 6 auch tatsächlich zu dem Ausschleusemodul M12d gefördert werden kann.

Der Vorsortierförderer V1 hat üblicherweise eine deutlich höhere Sortierleistung als z.B. die Sortierförderer S11, S12 und S13. Anders als in zeichnerischen Darstellung gewählt, können die Ausschleusemodule V1a bis V1c auch als kontinuierlich und dynamisch antreibbare Ausschleuseelemente entlang des gesamten Weges des Vorsortierförderers V1 angeordnet sein. Typischerweise kann ein derartiger Vorsortierförderer dann als Linear-Schuhsorter (engl. sliding-shoe sorter) ausgestaltet sein. Seine Leistung beträgt oft auch die bis zu 10-fache Leistung eines der die Zielstellen bedienenden Sortierförderers. Es sei zumindest angemerkt, dass die Vorsortierförderer aber auch als Taschensorter oder als Abwurfschacht-Sorter (Bomb-Bay-Sorter) ausgestaltet sein könnten.

Aus Gründen der Übersichtlichkeit wurde hier darauf verzichtet die Sensoren und sonstigen Steuerungselemente mit einzuzeichnen, die erforderlich sind, damit die Sortiersteuerung 4 ein Sortierstück 6 auch tatsächlich mittels der Ansteuerung der richtigen Ausschleusemodule in die bestimmungsgemässe Zielstelle fördern kann. Die Anordnung derartiger Sensoren und Steuerungselemente sowie die zielstellengerechte Steuerung des Sortierprozesses kann dabei allerdings auch als zum Stand der Technik gehörend angesehen werden. Das Ausführungsbeispiel der Figur 2 ist nicht Teil der Erfindung.

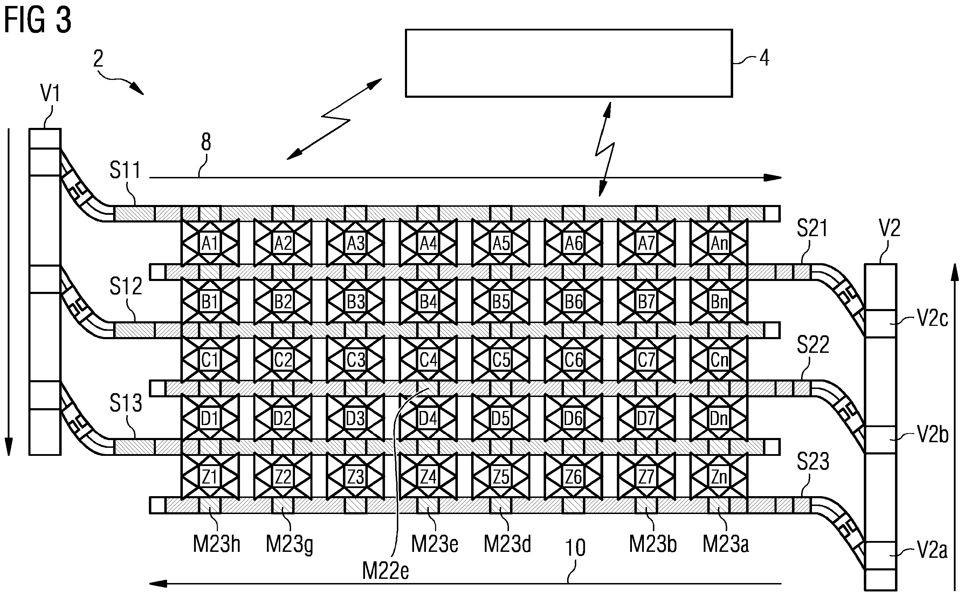

Figur 3 zeigt nun bereits in einer schematischen Aussicht das Sortiersystem 2 gemäss dem Ausbaustand gemäss Figur 2 zusätzlich mit einer Anzahl von drei zweiten Sortierförderern S21, S22 und S23 und einem diesen drei zweiten Sortierförderern S21, S22, S23 vorgelagerten ersten Vorsortierförderer V2. Auch diese drei zweiten Sortierförderer S21, S22, S23 weisen eine Anzahl von je 8 von der Sortiersteuerung 4 (auch drahtlos) ansteuerbare Ausschleusemodule M21a bis M21h, M22a bis M22h, M23a bis M23h - kurz auch einfach mit dem Buchstaben M bezeichnet - auf. Die Ausschleusemodule M sind dabei als Gurtkipper-Module ausgestaltet. Zwischen den Ausschleusemodulen M befinden sich hier nicht weiter bezeichnete Gurtfördermodule.

Die zweiten Sortierförderer S21, S22 sind hier vorliegend ebenfalls in der zweiten Ebene E2 oberhalb der ersten Ebene E1 und dabei so zwischen Reihen von Zielstellen ZS verlaufend angeordnet, dass die in den zweiten Sortierförderern S21, S22 angeordneten Ausschleusemodule M21a bis M21h, M22a bis M22h in der Lage sind, zu beiden Seiten der zweiten Sortierförderer S21, S22 angeordnete Zielstellen ZS mit für diese Zielstellen ZS vorgesehenen und in einer zweiten Förderrichtung 10 (entgegengesetzt zur ersten Förderrichtung 8) geförderten Sortierstücken 6 zu bedienen. So kann beispielsweise ein Sortierstück 6 von dem Ausschleusemodul M22e in die Zielstelle C4 oder in die Zielstelle D4 entleert werden. Besonders an dieser Anordnung ist nun, dass jede Zielstelle nun von einem der ersten Sortierförderer und von einem der zweiten Sortierförderer jeweils alternierend aus unterschiedlichen Richtungen zweifach bedient werden kann.

In der zeichnerischen Darstellung auf der rechten Seite des Arrays von Zielstellen ZS befindet sich ein ebenfalls in der zweiten Ebene E2 angeordneter zweiter Vorsortierförderer V2 mit von der Sortiersteuerung 4 ansteuerbaren Ausschleusemodulen V2a, V2b, V2c, wobei dieser zweite Vorsortierförderer V2 mit seinen Ausschleusemodulen V2a bis V2c so drahtlos ansteuerbar ist, dass ein Sortierstück an den Sortierförderer der Vielzahl der zweiten Sortierfördern übergebbar ist, der die für dieses Sortierstück vorgesehene Zielstelle bedient. Zurückkommend auf das vorstehend genannte Beispiel mit dem Ausschleusemodul M22e bedarf es hier einer Ansteuerung des Ausschleusemoduls V2b, damit das Sortierstück 6 auch tatsächlich zu dem Ausschleusemodul M22e gefördert werden kann.

Ist nun beispielsweise ein Sortierstück für die Zielstelle C6 bestimmt, so steuert die Sortiersteuerung einerseits für dieses Sortierstück 6 das Ausschleusemodul V1b und das Ausschleusemodul M12f für den Abwurf nach links an und andererseits das Ausschleusemodul V2b und das Ausschleusemodul M22c für den Abwurf nach rechts an. Somit kann die Sortierkapazität durch die Hinzunahme der zweiten Sortierförderer S21, S22, S23 und des zweiten Vorsortierförderers V2 verdoppelt werden, ohne dass Anlagenteile schneller laufen oder ähnliche Beschleunigungsschritte vorgesehen sein müssten. Dabei ist anzumerken, dass die Sortierleistung vor allem durch die Kapazität der Vorsortierförderer bestimmt wird. Die eigentlichen Sortierförderer limitieren nur die sogenannten Burst Rate (d.h. wie viele Sortierstücke gehen hintereinander vom Vorsortierförderer auf die Sortierstrecke entlang eines Sortierförderers).

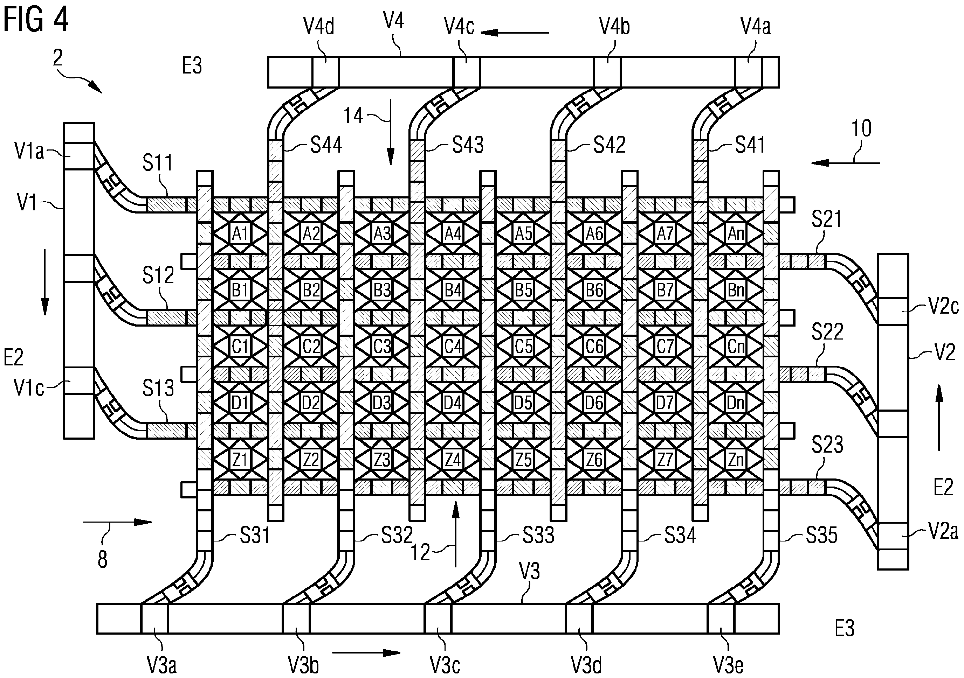

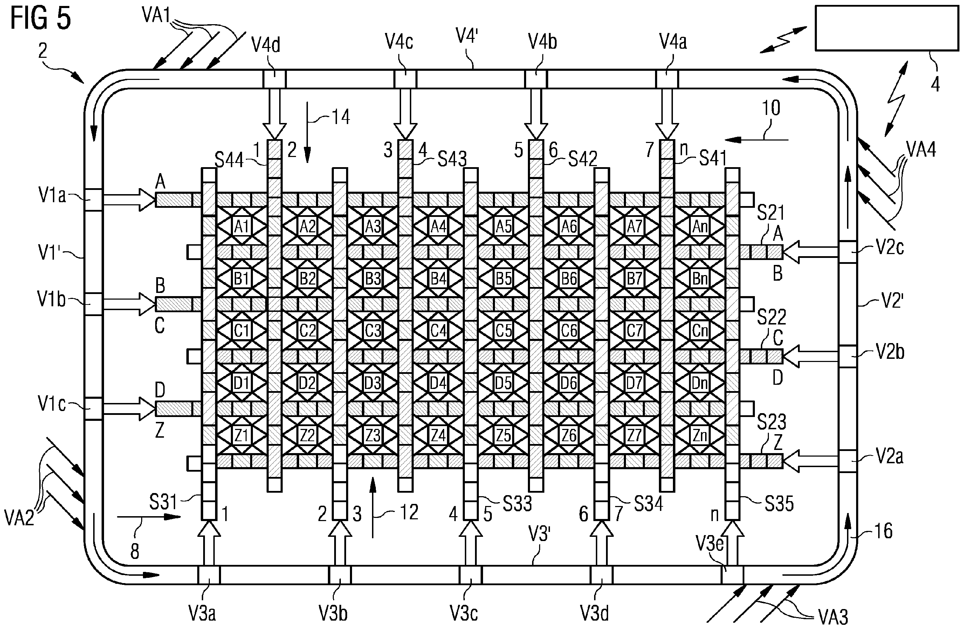

Es sei an dieser Stelle auch noch einmal erwähnt, dass die Beschriftung der Figur 3 und der weiteren Figuren 4 und 5 mit Bezugszeichen auf das Wesentliche reduziert worden ist. Gerade die Nummerierung der Ausschleusemodule der ersten und zweiten Sortierförderer ergibt sich logisch in der Sicht von links nach rechts bzw. von rechts nach links in der jeweiligen Förderrichtung der Sortierförderer. Ansonsten haben gleiche Bauteile in den Figuren 1 bis 5 auch immer dasselbe Bezugszeichen.

Fast schon selbsterklärend stellt sich nun die Ausbaustufe des Sortiersystems 2 in Figur 4 aufbauend auf der Ausbaustufe gemäss Figur 3 dar. In einer dritten Ebene E3, die sich über der Ebene E2 befindet, sind nun eine Gruppe von fünf dritten Sortierförderern S31 bis S35 mit vorgeschaltetem dritten Vorsortierförderer V3 und eine Gruppe von vier vierten Sortierförderer S41 bis S44 angeordnet worden. Dabei ist eine Förderrichtung 12 der dritten Sortierförderer S31 bis S35 entgegengesetzt zu einer Förderrichtung 14 der vierten Sortierförderer S41 bis S44. Beiden Förderrichtungen 12 und 14 verlaufen in einem rechten Winkel zu den Förderrichtungen 8 und 10 der ersten Sortierförderer S11 bis S13 bzw. der zwei Sortierförderer S21 bis S23.

Es sei hier angemerkt, dass nun auch noch weitere Gruppen von Sortierförderer in weiteren Ebenen vorgesehen sein können. So kann beispielsweise das Abbild der in der zweiten Ebene E2 und der dritten Ebene E4 angeordneten Sortierförderer auch auf eine vierte Ebene bzw. eine fünfte Ebene übertragen werden. Selbstverständlich ist je nach Auslegung auch noch eine Anordnung von Sortierförderern mit vorgeschalteten Vorsortierförderern in noch mehr Ebenen möglich. Ebenso wäre es auch möglich, dass die erste und die zweite Richtung und die dritte und die vierte Richtung auch paarweise gleich wären.

In der zeichnerischen Darstellung ist jedoch trotz der Fülle der Komponenten leicht zu erkennen, dass in der Ausbaustufe gemäss Figur 4 nun jede Zielstelle ZS vierfach bedient werden kann. Beispielhaft sei dies einmal für die Zielstelle D6 erläutert, wobei die folgenden Ausschleusemodule entsprechend anzusteuern sind:
a) Vorsortierförderer V1, V1c, Sortierförderer S13, M13f links;
b) Vorsortierförderer V3, V3d, Sortierförderer S34, M34b links;
c) Vorsortierförderer V2, V2b, Sortierförderer S22, M22c links; und
d) Vorsortierförderer V4, V4b, Sortierförderer S42, M42d links.

Die Figur 5 zeigt nun schematisch das Sortiersystem 2, wobei die Anordnung der Zielstellen ZS und die Anordnung der Sortierförderer S11 bis S44 der Anordnung gemäss der Figur 4 entspricht. Gegenüber der Figur 4 wurde in der Figur 5 nun eine modifizierte Anordnung für die vier Vorsortierförderer V1 bis V4 gewählt. Dabei wurde eine Ausgestaltung mit einem als in vier logisch unterteilte Vorsortierförderer ausgebildeten Ringsorter 16. Anstelle der Vorsortierförderer V1 bis V4 werden somit hier vier logisch unterteilte Unterabschnitte V1' bis V4' für die Vorsortierung gewählt. Jedem dieser logisch unterteilten Unterabschnitte V1' bis V4' geht eine Aufgabevorrichtung VA1 bis VA 4 voran, mit der die Sortierstücke 6 auf den Ringsorter 16 aufgegeben werden können. Diese Aufgabevorrichtungen VA1 bis VA4 können dabei als Einschussstellen ausgestaltet sein, die die Sortierstücke zwecks ihrer Aufgabe auf den Ringsorter 16 bereits eine Geschwindigkeitskomponente in Richtung der jeweilig vorherrschenden Förderrichtung des Ringsorters 16 aufweisen. Somit besteht für jedes Sortierstück 6 die Möglichkeit, dieses an vier verschiedenen Stellen einem der Sortierförderer S11 bis S44 zu übergeben, auf dem es dann zu der zugehörigen Zielstelle transportiert und dort in die Zielstelle ausgeschieden wird.

Somit ergibt sich in dem gezeigten Ausführungsbeispiel gemäss der Figur 5 (sowie natürlich auch bei allen übrigen im Sinne der Erfindung gestalteten Ausführungsbeispiele, insbesondere solche mit in einer hexagonalen Matrix angeordneten Zielstellen, eine Vielzahl von Vorteilen, die die gängigen Bedürfnisse und Trends des KEP-Marktes abdecken, da hier schnell und mit einfachen Aufbau und hoher konfigurierbarer Leistung im One-Stream, one-touch-Verfahren sortiert werden kann. Im Besonderen ermöglichen die Ausgestaltungen gemäss der vorliegenden Erfindung ein breites Spektrum an Sortiergut zu verarbeiten; das Einklemmen von Bändern, Stripes oder zu flachen Sendungen kann damit sicher verhindert werden. Dies ermöglicht es auch, dass eine Vorsortierung nach Sortiergutgruppen, wie z.B. Flyer, Smalls, Pakete, auch mit lageinstabiler Verpackung und dergleichen, vermieden werden kann.

Ebenso ist auch keine Vorsortierung nach Zielstellengruppen notwendig, weil mit jedem der Vorsortierabschnitte VA1 bis VA4 jede mögliche Zielstelle erreichen kann (one stream). Ein einmal auf den Ringsorter 16 ausgegebenes Sortierstück 6 muss daher bis zur Sortierung nicht mehr angefasst werden (one touch), ausser dass vielleicht ein Sortier- oder Lesefehler auftritt und das Sortierstück in einem jeweils am Ende eines Sortierförderers angeordneten Überlaufs ausgeschieden werden muss. Zudem ist die Sortierleistung dieses Sortiersystems 2 sehr flexibel konfigurierbar. Durch die Anordnung von weiteren Sortierförderern in weiteren Ebenen kann die Anzahl von Sortierwegen zu einer Zielstelle weiter erhöht werden. Zudem ist auch die Anzahl der Zielstellen in weiten Grenzen skalierbar und auch die Art der Zielstellen sind an die jeweiligen Bedürfnisse und/oder die Eigenschaften der Sortierstücke in weiten Grenzen anpassbar.

Ausserdem ermöglicht die Matrixanordnung der Zielstellen eine besonders kompakte Bauweise des Sortiersystems, sodass es auch in einer Standardindustriehalle erstellt werden kann. Hinsichtlich des Aufbaukosten, der Inbetriebnahme und des Unterhalts weist das vorstehend erläuterte Sortiersystem 2 eine hohe Anzahl von Gleichteilen auf, weil immer wieder die gleichen Module für den Gurtkipper, die Gurtförderer und die Vorsortierförderer verwendet werden. Die wirkt zudem auch noch günstig auf das Engineering aus, da sich durch die immer wiederkehrenden Module der Engineering-Aufwand im Wesentlichen auf das Konfigurieren des Sortiersystems beschränkt.

## Patentansprüche

1. System (2) zum Sortieren von Sortierstücken (6) in mit ihrer Zieldestination Iogisch verknüpfte Zielstellen (ZS), umfassend:
a) eine Vielzahl von in einem Array angeordnete Zielstellen (ZS), wobei die Zielstellen (ZS) zudem im Wesentlichen in einer ersten Ebene (E1) befindlich angeordnet sind, und wobei jeder der Zielstellen (ZS) mittels einer Sortiersteuerung (4) zumindest temporär eine oder mehrere Zieldestinationen logisch zuordenbar sind;
b) eine Vielzahl von in einer ersten Richtung (8) verlaufenden ersten Sortierförderern ( S12, S13) mit von der Sortiersteuerung ansteuerbaren Ausschleusemodulen ( M12a bis M12h, M13a bis M13h), die in einer oberhalb der ersten Ebene (E1) befindlichen zweiten Ebene (E2) und dabei so zwischen Reihen von Zielstellen (ZS) verlaufend angeordnet sind, dass die in den ersten Sortierförderern (S12, S13) angeordneten Ausschleusemodule ( M12a bis M12h, M13a bis M13h) in der Lage sind, zu beiden Seiten der ersten Sortierförderer (S11, S12, S13) angeordnete Zielstellen (ZS) mit für diese Zielstellen (ZS) vorgesehenen Sortierstücken (6) zu bedienen,
c) ein auf einer Seite des Arrays von Zielstellen (ZS) und ebenfalls in der zweiten Ebene (E2) angeordneter erster Vorsortierförderer (V1) mit von der Sortiersteuerung (4) ansteuerbaren Ausschleusemodulen ( V1b, V1c), wobei der erste Vorsortierförderer (V1) mit seinen Ausschleusemodulen ( V1b, V1c) so steuerbar ist, dass ein Sortierstück (6) an den Sortierförderer der Vielzahl der ersten Sortierförderern ( S12, S13) übergebbar ist, der die für dieses Sortierstück (6) vorgesehene Zielstelle (ZS) bedient,
**dadurch gekennzeichnet, dass**
d) eine Vielzahl von in einer zweiten zur ersten Richtung (8) in einem Winkel verlaufenden Richtung (10) verlaufende zweite Sortierförderer (S21, S22) mit von der Sortiersteuerung (4) ansteuerbaren Ausschleusemodulen (M21a bis M21h, M22a bis M22h) vorgesehen sind, die in der oberhalb der ersten Ebene (E1) befindlichen zweiten Ebene (E2) und dabei so zwischen Reihen von Zielstellen (ZS) verlaufend angeordnet sind, dass die in den zweiten Sortierförderern (S21, S22) angeordneten Ausschleusemodule (M21a bis M21h, M22a bis M22h) in der Lage sind, zu beiden Seiten der zweiten Sortierförderer (S21, S22) angeordnete Zielstellen (ZS) mit für diese Zielstellen (ZS) vorgesehenen Sortierstücken (6) zu bedienen, und
e) ein auf einer Seite des Arrays von Zielstellen (ZS) und ebenfalls in der zweiten Ebene (E2) angeordneter zweiter Vorsortierförderer (V2) mit von der Sortiersteuerung (4) ansteuerbaren Ausschleusemodulen ( V2b, V2c) vorgesehen ist, wobei der zweite Vorsortierförderer (V2) auf der gegenüberliegenden Seite des Arrays von Zielstellen (ZS) angeordnet mit seinen Ausschleusemodulen ( V2b, V2c) so steuerbar ist, dass ein Sortierstück (6) an den Sortierförderer der Vielzahl der zweiten Sortierförderern (S21, S22) übergebbar ist, der die für dieses Sortierstück (6) vorgesehene Zielstelle (ZS) bedient.

2. System (2) nach Anspruch 1,
**dadurch gekennzeichnet, dass**
die zweite Richtung (10) entgegengesetzt zur ersten Richtung (8) verläuft und die ersten und zweiten Sortierförderer (S21, S12, S22, S13) so angeordnet sind, dass sie in alternierenden Richtungen verlaufend das Array von Zielstellen (ZS) überspannen.

3. System (2) nach einem der vorangehenden Ansprüche,
**dadurch gekennzeichnet, dass**
das Array von Zielstellen (ZS) ein rechteckiges Muster mit M Spalten und N Zeilen aufweist, in dem die Zielstellen (ZS) bis zu vier nächste Nachbarzielstellen aufweisen.

4. System (2) nach Anspruch 1 oder Anspruch 2,
**dadurch gekennzeichnet, dass**
das Array von Zielstellen ein hexagonales Muster aufweist, in dem die Zielstellen bis zu sechs nächste Nachbarzielstellen aufweisen.

5. System (2) nach einem der vorangehenden Ansprüche,
**dadurch gekennzeichnet, dass**
eine Vielzahl von in einer dritten Richtung (12) verlaufende dritte Sortierförderern (S32 bis S34) 005) mit von der Sortiersteuerung (4) ansteuerbaren Ausschleusemodulen (M32a bis M34e) vorgesehen ist, die in einer oberhalb der zweiten Ebene (E2) befindlichen dritten Ebene (E3) und dabei so zwischen Reihen von Zielstellen (ZS) verlaufend angeordnet sind, dass die in den dritten Sortierförderern (S32 bis S34) angeordneten Ausschleusemodule (M32a bis M34e) in der Lage sind, zu beiden Seiten der dritten Sortierförderer (S32 bis S34) angeordnete Zielstellen (ZS) mit für diese Zielstellen (ZS) vorgesehenen Sortierstücken (6) zu bedienen, und c) ein auf einer Seite des Arrays von Zielstellen (ZS) und vorzugsweise ebenfalls in der dritten Ebene (E3) angeordneter dritter Vorsortierförderer (V3) mit von der Sortiersteuerung ansteuerbaren Ausschleusemodulen (V3b bis V3d) vorgesehen ist, wobei der dritte Vorsortierförderer (V3) mit seinen Ausschleusemodulen (V3b bis V3d) so steuerbar ist, dass ein Sortierstück (6) an den Sortierförderer der Vielzahl der dritten Sortierförderern (S32 bis S34) übergebbar ist, der die für dieses Sortierstück (6) vorgesehene Zielstelle (ZS) bedient.

6. System (2) nach Anspruch 5,
**dadurch gekennzeichnet, dass**
eine Vielzahl von in einer vierten zur dritten Richtung (12) in einem Winkel verlaufenden Richtung (14) verlaufende vierte Sortierförderer (S41 bis S44) mit von der Sortiersteuerung ansteuerbaren Ausschleusemodulen (M41a bis M44e) vorgesehen sind, die in der oberhalb der zweiten Ebene (E2) befindlichen dritten Ebene (E3) und dabei so zwischen Reihen von Zielstellen (ZS) verlaufend angeordnet sind, dass die in den vierten Sortierförderern (S41 bis S44) angeordneten Ausschleusemodulen (M41a bis M44e) in der Lage sind, zu beiden Seiten der vierten Sortierförderer (S41 bis S44) angeordnete Zielstellen (ZS) mit für diese Zielstellen (ZS) vorgesehenen Sortierstücken (6) zu bedienen, und
ein auf einer Seite des Arrays von Zielstellen (ZS) und vorzugsweise ebenfalls in der dritten Ebene (E3) angeordneter vierter Vorsortierförderer (V4) mit von der Sortiersteuerung (4) ansteuerbaren Ausschleusemodulen (V4a bis V4d) vorgesehen ist, wobei der vierte Vorsortierförderer (V4) auf der gegenüberliegenden Seite des Arrays von Zielstellen (ZS) angeordnet mit seinen Ausschleusemodulen (V4a bis V4d) so steuerbar ist, dass ein Sortierstück (6) an den Sortierförderer der Vielzahl der vierten Sortierförderern (S41 bis S44) übergebbar ist, der die für dieses Sortierstück (6) vorgesehene Zielstelle (ZS) bedient.

7. System (2) nach Anspruch 5 oder 6,
**dadurch gekennzeichnet, dass**
die vierte Richtung (14) entgegengesetzt zur dritten Richtung (12) verläuft und die dritten und vierten Sortierförderer (S41 bis S44) so angeordnet sind, dass sie in alternierenden Richtungen verlaufend das Array von Zielstellen (ZS) überspannen.

8. System (2) nach einem der vorangehenden Ansprüche 5 bis 7, **dadurch gekennzeichnet, dass**
die dritte und die vierte Richtung (12, 14) in einem Winkel, vorzugsweise im Wesentlichen senkrecht oder in einem Winkel von 60°, zur ersten und zweiten Richtung (8, 10) verlaufen.

9. System (2) nach einem der vorangehenden Ansprüche, **dadurch gekennzeichnet, dass**
mindestens einer der Vorsortierförderer (V1 bis V4) als das Array von Zielstellen (ZS) umschliessender Ringsorter (16) ausgestaltet ist.

10. System (2) nach Anspruch 9, **dadurch gekennzeichnet, dass** alle Vorsortierförderer (V1 bis V4) zusammen in einem das Array von Zielstellen (ZS) umschliessenden Ringsorter (16) eingebunden sind, wobei der Ringsorter (16) in eine logische Anzahl von Sortierabschnitten (V1' bis V4') unterteilt ist, die der Anzahl von Gruppen von Sortierförderern (S12, S13, S21, S22, S32 bis S34, S41 bis S44) entspricht, wobei jeder Sortierabschnitt (V1' bis V4') einer Gruppe von Sortierförderern (S11 bis S44) zugeordnet ist und vor jedem Sortierabschnitt (V1' bis V4') - gesehen in Förderrichtung der Sortierstücke - eine Aufgabestelle (VA1 bis VA4) zur Aufgabe von Sortierstücken (6) auf den Ringsorter (16) vorgesehen ist.

## Claims

1. System (2) for sorting sorting pieces (6) into target locations (ZS) logically associated with their target destination, comprising:
a) a plurality of target locations (ZS) arranged in an array, wherein the target locations (ZS) are moreover arranged to be located substantially in a first plane (E1), and wherein each of the target locations (ZS) can be logically assigned, at least temporarily, one or more target destinations by means of a sorting control (4);
b) a plurality of first sorting conveyors (S12, S13) running in a first direction (8) and having discharge modules (M12a to M12h, M13a to M13h) which can be actuated by the sorting control, which are arranged in a second plane (E2) located above the first plane (E1) and extending between rows of target locations (ZS) in such a way that the discharge modules (M12a to M12h, M13a to M13h) arranged in the first sorting conveyors (S12, S13) are able to reach target locations (ZS) arranged on both sides of the first sorting conveyors (S11, S12, S13) with sorting pieces (6) provided for these target locations (ZS),
c) a first presorting conveyor (V1) arranged on one side of the array of target locations (ZS) and also in the second plane (E2), with discharge modules (V1b, V1c), wherein the first presorting conveyor (V1) with its discharge modules (V1b, V1c) is controllable in such a way that a sorting piece (6) can be transferred to the sorting conveyor of the plurality of first sorting conveyors (S12, S13) which serves the target location (ZS) provided for this sorting piece (6),
**characterized in that**
d) a plurality of second sorting conveyors (S21, S22) are provided which extend in a second direction (10) at an angle to the first direction (8) and which have discharge modules (M21a to M21h, M22a to M22h) which can be actuated by the sorting control (4) and which are arranged in the second plane (E2) located above the first plane (E1) and so as to extend between rows of target locations (ZS) , **in that** the discharge modules (M21a to M21h, M22a to M22h) arranged in the second sorting conveyors (S21, S22) are capable of serving target locations (ZS) arranged on both sides of the second sorting conveyors (S21, S22) with sorting pieces (6) provided for these target locations (ZS) , and
e) a second presorting conveyor (V2) arranged on one side of the array of target locations (ZS) and likewise in the second plane (E2) is provided with discharge modules (V2b, V2c) which can be actuated by the sorting control (4), wherein the second presorting conveyor (V2) arranged on the opposite side of the array of target locations (ZS) is controllable with its discharge modules (V2b, V2c) in such a way that a sorting piece (6) is transferable to the sorting conveyor of the plurality of second sorting conveyors (S21, S22) which serves the target location (ZS) provided for this sorting piece (6).

2. System (2) according to claim 1,
**characterized in that**
the second direction (10) runs opposite to the first direction (8) and the first and second sorting conveyors (S21, S12, S22, S13) are arranged to run in alternating directions spanning the array of target locations (ZS).

3. System (2) according to any one of the preceding claims,
**characterized in that**
the array of target locations (ZS) has a rectangular pattern with M columns and N rows, in which the target locations (ZS) have up to four nearest neighbour target locations.

4. System (2) according to claim 1 or claim 2,
**characterized in that**
the array of target locations has a hexagonal pattern in which the target locations have up to six nearest neighbour target locations.

5. System (2) according to any one of the preceding claims,
**characterized in that**
a plurality of third sorting conveyors (S32 to S34) running in a third direction (12) are provided with discharge modules (M32a to M34e) controllable by the sorting control (4), said discharge modules (M32a to M34e) being arranged in a third plane (E3) located above the second plane (E2) and thus running between rows of target locations (ZS), **in that** the discharge modules (M32a to M34e) arranged in the third sorting conveyors (S32, S34) are capable of serving target locations (ZS) arranged on both sides of the third sorting conveyors (S32 to S34) with sorting pieces (6) provided for these target locations (ZS), and
c) a third presorting conveyor (V3), which is arranged on one side of the array of target locations (ZS) and preferably likewise in the third plane (E3), is provided with discharge modules (V3b to V3d) which can be actuated by the sorting control, wherein the third presorting conveyor (V3) with its discharge modules (V3b to V3d) can be controlled in such a way that a sorting piece (6) can be transferred to the sorting conveyor of the plurality of third sorting conveyors (S32 to S34) which serves the target location (ZS) provided for this sorting piece (6).

6. System (2) according to claim 5,
**characterized in that** a
plurality of fourth sorting conveyors (S41 to S44) running in a fourth direction (14) at an angle to the third direction (12) are provided with discharge modules (M41a to M44e) which can be actuated by the sorting control, which are arranged in the third plane (E3) located above the second plane (E2) and extending between rows of target locations (ZS) in such a way that the discharge modules (M41a to M44e) arranged in the fourth sorting conveyors (S41 to S44) are capable of serving target locations (ZS) arranged on both sides of the fourth sorting conveyors (S41 to S44) with sorting pieces (6) provided for these target locations (ZS) and
a fourth presorting conveyor (V4) arranged on one side of the array of target locations (ZS) and preferably also in the third plane (E3) is provided with discharge modules (V4a to V4d) controllable by the sorting control (4), wherein the fourth presorting conveyor (V4) arranged on the opposite side of the array of target locations (ZS) is controllable with its discharge modules (V4a to V4d) in such a way that a sorting piece (6) can be transferred to the sorting conveyor of the plurality of fourth sorting conveyors (S41 to S44) which serves the target location (ZS) provided for this sorting piece (6).

7. System (2) according to claim 5 or 6,
**characterized in that**
the fourth direction (14) runs opposite to the third direction (12) and the third and fourth sorting conveyors (S41 to S44) are arranged to run in alternating directions spanning the array of target locations (ZS).

8. System (2) according to any of the preceding claims 5 to 7, **characterized in that** the third and fourth directions (12, 14) extend at an angle, preferably substantially perpendicular or at an angle of 60°, to the first and second directions (8, 10).

9. System (2) according to any one of the preceding claims, **characterized in that** at least one of the presorting conveyors (V1 to V4) is designed as a ring sorter (16) enclosing the array of target locations (ZS).

10. System (2) according to claim 9, **characterized in that** all presorting conveyors (V1 to V4) are integrated together in a ring sorter (16) enclosing the array of target locations (ZS), wherein the ring sorter (16) is divided into a logical number of sorting sections (V1' to V4') corresponding to the number of groups of sorting conveyors (S12, S13, S21, S22, S32 to S34, S41 to S44), wherein each sorting section (V1' to V4') is assigned to a group of sorting conveyors (S11 to S44), and a feed point (VA1 to VA4) being provided upstream of each sorting section (V1' to V4') - as seen in the conveying direction of the sorting pieces - for feeding sorting pieces (6) onto the ring sorter (16).

## Revendications

1. Système (2) destiné à trier des articles à trier (6) vers des emplacements cibles (ZS) liés logiquement à leur destination cible, comprenant :
a) une pluralité d'emplacements cibles (ZS) disposés en un réseau, les emplacements cibles (ZS) étant en outre disposés de manière à se trouver sensiblement dans un premier plan (E1), et chacun des emplacements cibles (ZS) pouvant être associé logiquement, au moins temporairement, à une ou plusieurs destinations cibles au moyen d'une commande de tri (4) ;
b) une pluralité de premiers convoyeurs de tri (S12, S13) s'étendant dans une première direction (8) et comprenant des modules d'éjection (M12a à M12h, M13a à M13h), qui sont pilotables par la commande de tri et qui sont disposés dans un deuxième plan (E2), situé au-dessus du premier plan (E1), en s'étendant entre des rangées d'emplacements cibles (ZS) de telle sorte que les modules d'éjection (M12a à M12h, M13a à M13h) disposés dans les premiers convoyeurs de tri (S12, S13) sont en mesure de desservir des emplacements cibles (ZS), disposés de part et d'autre des premiers convoyeurs de tri (S11, S12, S13), avec des articles à trier (6) destinés à ces emplacements cibles (ZS) ;
c) un premier convoyeur de pré-tri (V1) qui est disposé d'un côté du réseau d'emplacements cibles (ZS) et également dans le deuxième plan (E2) et qui comprend des modules d'éjection (V1b, V1c) pilotables par la commande de tri (4), le premier convoyeur de pré-tri (V1) avec ses modules d'éjection (V1b, V1c) pouvant être commandé de telle sorte qu'un article à trier (6) peut être remis au convoyeur de tri parmi la pluralité de premiers convoyeurs de tri (S12, S13) qui dessert l'emplacement cible (ZS) prévu pour cet article à trier (6),
**caractérisé en ce que**
d) il est prévu une pluralité de deuxièmes convoyeurs de tri (S21, S22) s'étendant dans une deuxième direction (10) formant un angle avec la première direction (8), comprenant des modules d'éjection (M21a à M21h, M22a à M22h) pilotables par la commande de tri (4), qui sont disposés dans le deuxième plan (E2), situé au-dessus du premier plan (E1), en s'étendant entre des rangées d'emplacements cibles (E2) de telle sorte que les modules d'éjection (M21a à M21h, M22a à M22h) disposés dans les deuxièmes convoyeurs de tri (S21, S22) sont en mesure de desservir des emplacements cibles (ZS), disposés de part et d'autre des deuxièmes convoyeurs de tri (S21, S22), avec des articles à trier (6) destinés à ces emplacements cibles (ZS), et
e) un deuxième convoyeur de pré-tri (V2) qui est disposé d'un côté du réseau d'emplacements cibles (ZS) et également dans le deuxième plan (E2) et qui comprend des modules d'éjection (V2b, V2c) pilotables par la commande de tri (4), le deuxième convoyeur de pré-tri (V2) étant disposé sur le côté opposé du réseau d'emplacements cibles (ZS) et pouvant être commandé, avec ses modules d'éjection (V2a, V2b, V2c), de telle sorte qu'un article à trier (6) peut être remis au convoyeur de tri parmi la pluralité de deuxièmes convoyeurs de tri (S21, S22) qui dessert l'emplacement cible (ZS) prévu pour cet article à trier (6).

2. Système (2) selon la revendication 1,
**caractérisé en ce que**
la deuxième direction (10) s'étend en sens opposé à la première direction (8), et les premiers et deuxièmes convoyeurs de tri (S21, S12, S22, S13) sont disposés de manière à couvrir le réseau d'emplacements cibles (ZS) en s'étendant dans des directions alternées.

3. Système (2) selon l'une des revendications précédentes,
**caractérisé en ce que**
le réseau d'emplacements cibles (ZS) présente un motif rectangulaire avec M colonnes et N lignes, dans lequel les emplacements cibles (ZS) ont jusqu'à quatre emplacements cibles voisins suivants.

4. Système (2) selon la revendication 1 ou la revendication 2,
**caractérisé en ce que**
le réseau d'emplacements cibles présente un motif hexagonal dans lequel les emplacements cibles ont jusqu'à six emplacements cibles voisins suivants.

5. Système (2) selon l'une des revendications précédentes,
**caractérisé en ce que**
il est prévu une pluralité de troisièmes convoyeurs de tri (S32 à S34) qui s'étendent dans une troisième direction (12) et qui comprennent des modules d'éjection (M32a à M34e) pilotables par la commande de tri (4), qui sont disposés dans un troisième plan (E3), situé au-dessus du deuxième plan (E2), en s'étendant entre des rangées d'emplacements cibles (ZS) de telle sorte que les modules d'éjection (M32a à M34e) disposés dans les troisièmes convoyeurs de tri (S32 à S34) sont en mesure de desservir des emplacements cibles (ZS), disposés de part et d'autre des troisièmes convoyeurs de tri (S32 à S34), avec des articles à trier (6) destinés à ces emplacements cibles (ZS), et
c) il est prévu un troisième convoyeur de pré-tri (V3) qui est disposé d'un côté du réseau d'emplacements cibles (ZS) et de préférence également dans le troisième plan (E3) et qui comprend des modules d'éjection (V3b à V3d) pilotables par la commande de tri, le troisième convoyeur de pré-tri (V3) avec ses modules d'éjection (V3b à V3d) pouvant être commandé de telle sorte qu'un article à trier (6) peut être remis au convoyeur de tri parmi la pluralité de troisièmes convoyeurs de tri (S32 à S34), qui dessert l'emplacement cible (ZS) prévu pour cet article à trier (6).

6. Système (2) selon la revendication 5,
**caractérisé en ce que**
il est prévu une pluralité de quatrièmes convoyeurs de tri (S41 à S44) s'étendant dans une quatrième direction (14) formant un angle avec la troisième direction (12), comprenant des modules d'éjection (M41a à M44e) pilotables par la commande de tri, qui sont disposés dans le troisième plan (E3), situé au-dessus du deuxième plan (E2), en s'étendent entre des rangées d'emplacements cibles (ZS) de telle sorte que les modules d'éjection (M41a à M44e) disposés dans les quatrièmes convoyeurs de tri (S41 à S44) sont en mesure de desservir des emplacements cibles (ZS), disposés de part et d'autre des quatrièmes convoyeurs de tri (S41 à S44), avec des articles à trier (6) destinés à ces emplacements cibles (ZS), et
il est prévu un quatrième convoyeur de pré-tri (V4) qui est disposé d'un côté du réseau d'emplacements cibles (ZS) et de préférence également dans le troisième plan (E3) et qui comprend des modules d'éjection (V4a à V4d) pilotables par la commande de tri (4), le quatrième convoyeur de pré-tri (V4) étant disposé sur le côté opposé du réseau d'emplacements cibles (ZS) et pouvant être commandé avec ses modules d'éjection (V4a à V4d) de telle sorte qu'un article à trier (6) peut être remis au convoyeur de tri parmi la pluralité de quatrièmes convoyeurs de tri (S41 à S44) qui dessert l'emplacement cible (ZS) prévu pour cet article à trier (6).

7. Système (2) selon la revendication 5 ou 6,
**caractérisé en ce que**
la quatrième direction (14) s'étend en sens opposé à la troisième direction (12), et les troisièmes et quatrièmes convoyeurs de tri (S41 à S44) sont disposés de manière à couvrir le réseau d'emplacements cibles (ZS) en s'étendant dans des directions alternées.

8. Système (2) selon l'une des revendications précédentes 5 à 7,
**caractérisé en ce que**
les troisième et quatrième directions (12, 14) s'étendent selon un angle, de préférence sensiblement perpendiculairement ou selon un angle de 60°, par rapport aux première et deuxième directions (8, 10).

9. Système (2) selon l'une des revendications précédentes,
**caractérisé en ce que**
l'un au moins des convoyeurs de pré-tri (V1 à V4) est conçu comme un trieur en anneau (16) entourant le réseau d'emplacements cibles (ZS).

10. Système (2) selon la revendication 9,
**caractérisé en ce que**
tous les convoyeurs de pré-tri (V1 à V4) sont intégrés ensemble dans un trieur en anneau (16) entourant le réseau d'emplacements cibles (ZS), le trieur en anneau (16) étant subdivisé en un nombre logique de sections de tri (V1' à V4') qui correspond au nombre de groupes de convoyeurs de tri (S12, S13, S21, S22, S32 à S34, S41 à S44), chaque section de tri (V1' à V4') étant associée à un groupe de convoyeurs de tri (S11 à S44), et un emplacement de dépose (VA1 à VA4) étant prévu devant chaque section de tri (V1' à V4') - vu dans la direction de convoyage des articles à trier - pour déposer des articles à trier (6) sur le trieur en anneau (16).
